# EUROPEAN PATENT SPECIFICATION

(11) **EP 1 696 426 B1**
(45) Date of publication and mention of the grant of the patent: **02.07.2008**
(21) Application number: 06076179.8
(22) Date of filing: 04.04.2002
(51) Int. Cl.: G11B 7/0065, G11B 7/28, G11B 15/68, G11B 17/08, G11B 17/22

(54) **Hybrid data storage system**
Speichersystem für Hybriddaten
Système hybride de stockage de données

(30) Priority: 04.04.2001 US 281245 P
(43) Date of publication of application: 30.08.2006
(62) Divisional of application: 02763961.6
(73) Proprietor: Aprilis, Inc., Maynard, MA 01754 (US)
(72) Inventor: Waldman, David A., Concord Massachusetts 01742 (US); Ingwall, Richard T., Newton Massachusetts 02465 (US); Horner, Glenn, West Roxbury Massachusetts 02132 (US)
(74) Representative: Greenwood, John David

(56) References cited:
- US-A- 4 094 011
- US-A- 5 519 517

## Description

### BACKGROUND

Certain digital data storage applications require storing a large amount of data in an archival storage system. Magnetic disk drives are sometimes used to store the data, for instance, in applications that require the capability of both writing and reading the data. However, in some applications, the volume of data is so immense that the use of magnetic disk drives may be uneconomical, in particular, when the data is suitable for write once data storage applications. Therefore, when a certain application requires storage of a large amount of data, magnetic tape drives have been used in combination with removable tape media. But the data transfer rate to and from the magnetic tape drives is typically significantly lower than that of magnetic disk drives and random access is lacking. Consequently, some systems use optical data storage devices, in combination with removable media, which are quite suitable for write-once-read-many (WORM) data storage applications. The rate of data transfer of optical data storage devices, however, is typically much lower than that of either magnetic disk drives or magnetic tape drives.

Such data storage systems have been accepted in the industry, and they are presumably considered to perform reasonably well for their intended purpose. However, they are not without their shortcomings. For instance, in some applications it is desirable to be able to read/write many times to a memory device and then to transfer this data to an optical storage device, which can improve the archival nature of the stored information.

US-A-5,519,517 discloses a method of storing and accessing data having the features of the preamble of claim 1. The present invention is characterized by the characterizing features of claim 1. Optional features are recited in the dependent claims

### SUMMARY

The present invention, implements a method of operating a hybrid data storage system. The data storage method includes a memory device that transfers information, that by way of example, is text, image, or voice data, or combinations thereof, to a read/write holographic drive engine. The read/write holographic drive engine writes data, represented as volume holograms, into, for example, a holographic recording medium such as a holographic recording disk or a holographic recording card, or any other holographic recording medium with a suitable geometry.

Once the medium is completed, that is, no additional data is to be written to the medium, it is transferred to a read only holographic drive engine which provides access to the data for a client through, for example, a wide area network (WAN), a local area network (LAN), an online storage system or a network attached storage system or storage area network, a near-online storage system, and/or an offline storage system. Similarly, either before or after the medium is completed, the data can be transferred from the read/write holographic drive engine to the client through, for example, the WAN, LAN, the online storage system or the network attached storage system or storage area network, the near-online storage system, and/or the offline storage system.

Embodiments of this aspect of the invention may include one or more of the following features. The system may include one or more data buffers that interface the memory device with the read/write holographic drive engine to facilitate transferring the data from the memory system to the read/write drive engine. The system can include one or more cache devices which substantially optimize access of data, by client components, such as those that may be part of the hybrid storage system, or devices that may be external to the hybrid storage system. The buffers and the cache devices may be stand-alone units, or they may reside in either the memory device or the read/write drive engine, or in both devices.

The memory device can be one or more magnetic disk drives. Additionally, or alternatively, the memory device can be one or more semiconductor memory devices, or any other suitable device, such as magneto-optical storage devices or magnetic or optical tape devices.

In some embodiments, the system is operated under the direction of a controller that may comprise a CPU, which provides operating instructions for the hybrid data storage system and may provide an interface between the hybrid data storage system and a WAN, at least one LAN, other storage systems, other memory systems, or combinations thereof.

In some embodiments, data is transferred between the read/write holographic drive engine and the read only holographic drive engine through a system bus. The system bus can also facilitate direct communication to the drive controller, the memory system, and/or the cache. The system can include a network adapter through which the system via the bus communicates with a WAN, at least one local area network that can also be a dedicated LAN or a campus area network(s) CAN, and which additionally may serve as an adapter for optical communications carried along fiber, through space, or using integrated optics, or combinations thereof, for wireless communications, and by way of example can communicate with protocols for IDE, SCSI, Fiber Channel, Firewire, GPIB, IEEE, SDSL, ADSL, HDSL, ISDN, ISDN PRI DS1, DS3, ATM, CATS, X10, T1, T3, Frame Relay, Token Ring, LATA, OC-xx, STS-x, SONET, CDDI, FDDI, , and the like.

The method can include transferring the holographic recording media between the storage devices, the read/write holographic drive engine, and the read only holographic drive engine by means of one or more transfer mechanisms.

A hybrid data storage system useful with the present invention includes a controller that receives information from an outside source of information, and a holographic drive engine. The information is transmitted between the holographic drive engine and the controller.

The outside source of information can be an on-line storage or a near-on-line storage or an off-line storage or a network attached storage system (NAS) or a storage attached network (SAN) or an enterprise storage system or other memory systems or devices having stored information, or combinations thereof.

The hybrid data storage system can receive the information through an interface to a wide area network (WAN) or one or more local area networks (LAN) that can also be a dedicated LAN or campus wide network (CAN). Additionally or alternatively, the hybrid data storage system can distribute information through the interface to the WAN or one or more LANs that can also be a dedicated LAN or campus wide network (CAN). The interface can be a network adapter that additionally may serve as an adapter for optical communications carried along optical fiber, through space, or using integrated optics, or combinations thereof, for wireless communications, and by way of example can communicate with protocols for IDE, SCSI, Fiber Channel, Firewire, GPIB, IEEE, SDSL, ADSL, HDSL, ISDN, ISDN PRI, DS1, DS3, ATM, X10, T1, T3, Frame Relay, Token Ring, LATA, OCxx, STS-x, SONET, CDDI, FDDI, and the like, or memory system or cache or combinations thereof.

Among other advantages, a particular embodiment of the data storage system implements the memory device, the read/write holographic drive engine, the read only holographic drive engine, and the media storage devices as separate modular units such that these units can operate independently of each other and with each other. For example, the memory device can transfer data to the read/write holographic drive engine that writes the data to a disk, while the read only holographic drive engine reads data from another disk and provides this information to a client.

Still other aspects, features and advantages follow.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis Instead being placed upon illustrating the principles of the invention.
FIG. 1 is a block diagram of a hybrid data storage system useful with the present invention
FIG. 2 is a flow diagram of a sequence of steps performed by the hybrid data storage system of FIG. 1.
FIG. 3 is a block diagram of an alternative embodiment of a hybrid data storage system useful with the present invention.
FIG. 4 is a block diagram of another alternative embodiment of a hybrid data storage useful with the present invention
FIG. 5 is a block diagram of yet another alternative embodiment of a hybrid data storage system useful with the present invention.

### DETAILED DESCRIPTION OF THE INVENTION

A description of preferred embodiments of the invention follows.

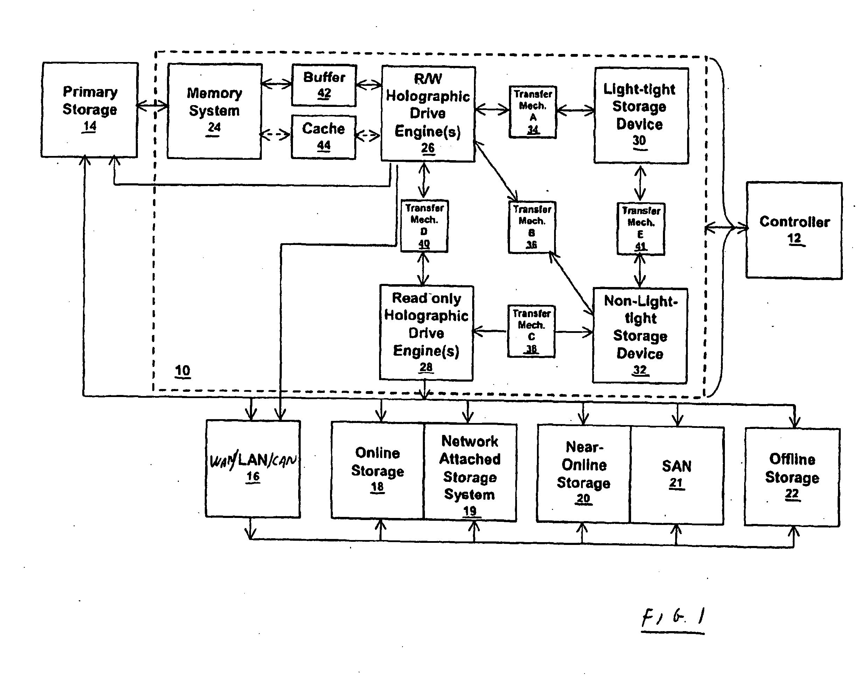

The hybrid data storage system useful with the present invention is illustrated generally at 10 in FIG. 1. Upon instructions from a controller 12, the hybrid data storage system 10 receives digital data, which can be text, images, or voice, or combinations thereof, from a primary storage system 14, stores the data, and then communicates the data information back to the primary storage system 14 or, for example, to one or more client devices attached to a wide area network (WAN) 16, at least one local area network (LAN) 16 that can also be a dedicated LAN or campus area network (CAN), an online storage system 18 or a network attached storage system 19, a near-online storage 20, a storage area network (SAN) 21, and/or an offline storage system 22. Additionally or alternatively, the WAN 16 or LAN 16 may transfer the data to the online storage system 18, the network attached storage system 19, the SAN 21, the near-online storage system 20, and/or the offline storage system 22.

The hybrid data storage system 10 includes a memory system 24 that directly receives data from the primary storage system 14 and transfers the data to one or more read/write (R/W) holographic drive engines 26. Read/write holographic drive engines are described in detail in Communications of the ACM, Nov. 2000/Vol. 43, No. 11, pp. 45-54, the entire contents of which are incorporated herein by reference, and in U.S-Patent No. 5,481,523 to Dewald, the entire contents of which are incorporated herein by reference. The memory system 24 can be one or more magnetic disk drives, semiconductor memory devices, such as integrated chips, or magneto-optical devices, or any other suitable memory device. The hybrid data storage system is also provided with one or more read only holographic drive engines 28, described in detail in U.S. Patent No. 5,481,523, a light-tight storage device 30, a non-light-tight storage device 32, and a set of transfer mechanisms -A, -B, -C, -D, and -E identified as 34, 36, 38, 40, and 41 respectively, which transfers holographic recording media between the read/write holographic drive engine 26, the read only holographic drive engine 28, the light-tight storage device 30, and the non-light-tight storage device 32. The light-tight storage device 30 and the non-light-tight storage device 32 may be a cartridge containing the holographic medium. The non-light-tight storage device 32 may also be a light-tight storage device (30). The transfer mechanisms, 34, 36, 38, 40, 41, may be five independent stand-alone units, or alternatively, a single transfer mechanism can be employed to provide the transfer functions amongst the read/write holographic drive engine 26, the read only holographic drive engine 28, the light-tight storage device 30, and the non-light-tight storage device 32.

The hybrid data storage system 10 also includes one or more data buffers 42 that can interface the memory system 24 to the read/write holographic drive engine 26. The data buffers 42 receive the data from the memory system 24 and then facilitate the process of transferring the data to the read/write holographic drive engine 26, which includes altering the format of the data, if needed, to make it suitably readable for the read/write holographic drive engine 26. The data buffers 42 may be separate physical units, or they may be logical structures in either the memory system 24 or the read/write holographic drive engine 26, or in both devices.

In the system shown in FIG. 1, one or more cache devices 44 are used in parallel with the data buffers 42 to improve or substantially optimize access by storage elements, such as those that are part of the hybrid storage system, or by client devices to the hybrid storage system. As with the data buffers 42, the caches may be either separate physical units, or they may be logical units in either the memory system 24 or the read/write holographic drive engine 26, or both the read/write holographic drive engine 26 and the memory system 24 can include one or more cache devices.

The cache devices 44, independently or in conjunction with the data buffers 42, substantially optimize access of data, in a particularly useful format, if needed, to or from the read/write holographic drive engine 26. That is, the cache devices 44 facilitate transferring the data to the read/write holographic drive engine 26 by maintaining at a rate at which the read/write holographic drive engine 26 is capable of reading and writing to a holographic recording medium in a particularly useful manner.

The hybrid data storage system 10 is able accommodate different types of holographic recording media. For instance, the holographic recording medium may be a disk, in which case, the read/write holographic drive engine 26 and the read only drive engine 28 consist of one or more holographic disk drives. When disks are used, the read/write holographic drive engine 26 writes digital holograms on one or more tracks of the disk. The tracks refer to the arrangement of areas of holographic recording in concentric paths, helical paths, or other suitable paths, about the disk such that areas of recording can be abutting, separated, or partially overlapped along the path, or fully overlapped within regions of the path such that the regions can be abutting, separated, or partially overlapped along the path, or combinations thereof. In addition, the arrangement of tracks can be abutting, separated, or partially overlapped, or combinations thereof. The disks can be stored, for example, in a jukebox arrangement in the light-tight storage 30, which may include one or more cartridges, and the non-light-tight storage device 32, which also may include one or more cartridges.

In addition to disks, other holographic recording media contemplated include media such as cards, which may be arranged in stacks or other configurations, or other useful geometries. When card stacks are employed, the data would be recorded along rows and/or columns of the card rather than about concentric or helical tracks as with holographic recording disks, such that areas of recording can be abutting, separated, or partially overlapped along the rows or columns, or fully overlapped within regions of the rows and/or columns such that these regions can be abutting, separated, or partially overlapped along the rows and/or columns, or combinations thereof. The arrangement of rows and/or columns themselves can be abutting, separated, or partially overlapped, or combinations thereof as well. If the card is intended to be rotated then the areas of holographic recording may be in concentric paths, helical paths, or other suitable paths, about the card such that areas of recording can be abutting, separated, or partially overlapped along the path, or fully overlapped within regions of the path such that the regions can be abutting, separated, or partially overlapped along the path, or combinations thereof. Similarly, the arrangement of tracks can be abutting, separated, or partially overlapped, or combinations thereof.

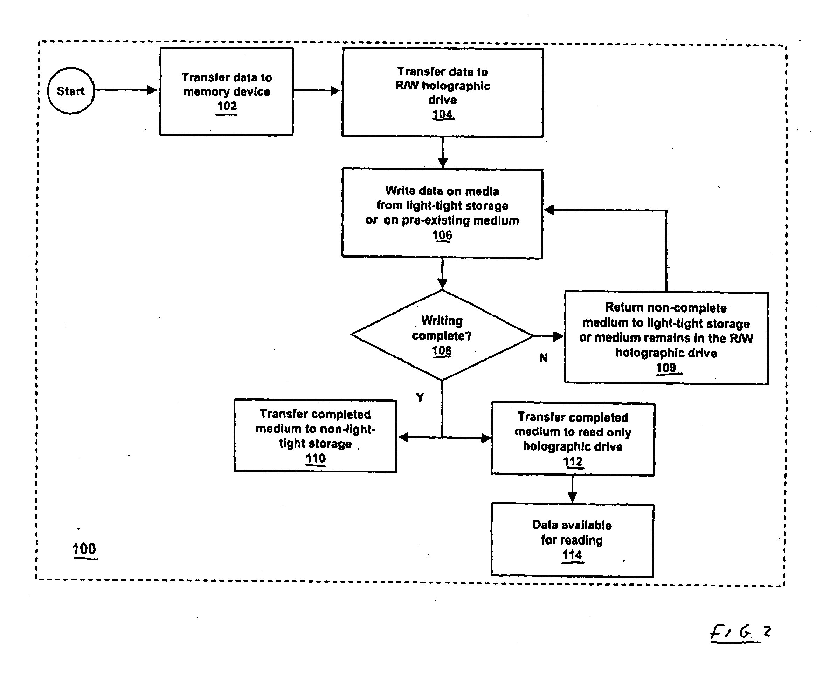

Referring now to FIG. 2, there is shown a process 100 performed, under instructions from the controller 12, by the hybrid data storage system 10 for obtaining data from the primary storage system 14 and transferring the data to a suitable recording medium. The controller 12 can include a CPU, and can provide an interface between the hybrid data storage system and, for example, a WAN, at least one LAN, other storage systems, other memory systems, or combinations thereof. The controller 12 can be provided with data management software, and may also maintain one or more file directories for locating data files. In this embodiment the controller can be a hybrid holographic storage network-attached storage device or filer. Additionally, the storage system can contain multiple controllers, such as for optimizing process loads for writing and/or reading from separate devices in the hybrid storage system, and for other purposes that may further optimize performance of the hybrid storage system.

In a first step 102, the process 100 begins with the memory system 24 receiving data from the primary storage system 14. Then in a step 104, via the data buffers 42 and the cache devices 44, the memory system 24 transmits the data to the read/write holographic drive engine 26.

In a step 106, the read/write holographic drive engine 26 writes the data to a recording medium, such as a disk or a card, or any other suitable medium that is holographically writable. The medium either already exists in the read/write holographic drive engine 26 or the transfer mechanism-A 34 obtains the medium from the light-tight disk storage device 30, or obtains it contained in a light-tight storage device such as a cartridge, and transfers it to the read/write holographic drive engine 26.

Next in a decision step 108, the process 100 determines if the holographic recording medium is completed, that is, no additional data is to be written to the medium. If not, the medium remains with the read/write holographic drive engine 26 for future writing (identified as path A), or, in a step 109, the transfer mechanism-A 34 returns the medium to the light-tight storage device 30 (identified as path B), or returns it contained in a light-tight storage device such as a cartridge, in which case the medium would be transferred back to the read/write holographic drive engine 26 for future recording sessions.

If it is determined in the decision step 108 that the medium is completed, one of two paths may be taken. Either, in a step 110, the transfer mechanism-B 36 moves the medium from the read/write holographic drive engine 26 and transfers it to the non-light-tight storage device 32, or transfers it contained in a light tight storage device or non-light-tight storage device such as a cartridge, or, in a step 112, the transfer mechanism-D 40 directly transfers the completed medium from the read/write holographic drive engine 26 to the read only holographic drive engine 28. The transfer mechanism-C 38 is used to transfer the completed media back and forth between the read only holographic drive engine 28 and the non-light-tight storage device 32. Further, the transfer mechanism-E 41 can be used to transfer the holographic medium between the light-tight storage device 30 and the non-light-tight storage device 32.

When the medium resides in the read only holographic drive engine 28, the data is available for reading, in a step 114, to a client though the primary storage system 12, the WAN and/or LAN 16, the online storage system 18, the network attached storage system 19, the near-online storage 20, the SAN 21, and/or the offline storage system 22, and the like.

During the operation of the hybrid data storage system 10, the controller 12 may also function as an arbiter between the client and the hybrid data storage system 10. For instance, the controller may instruct the read/write holographic drive engine 26 to operate independently from the read only holographic drive engine 28. As an example, the read/write holographic drive engine 26 can be writing data on one disk, while the read only holographic drive engine 28 may be obtaining another disk from the non-light-tight storage device 32 and then read data from that disk to provide the data information to the client. Alternatively, the read/write drive engine and the read-only drive engine can be managed by separate controllers, such as for the purpose of providing separate I/0 data streams.

The hybrid data storage system useful with the present invention is not limited to the systems discussed above. For example, the hybrid data storage system 10 was described above as having a primary storage system. Alternatively, the data storage system 10 could be a stand alone storage system. For instance, the read/write holographic drive engine 26 and the read only holographic drive engine 28 could be part of, alone or in combination with the memory system 24, the light-tight storage device 30, the non-light-tight storage device 32, other storage systems 18, 19, 20, 21, or 22, or the like, and/or at least one digital video device (DVD) or arrangement of DVDs.

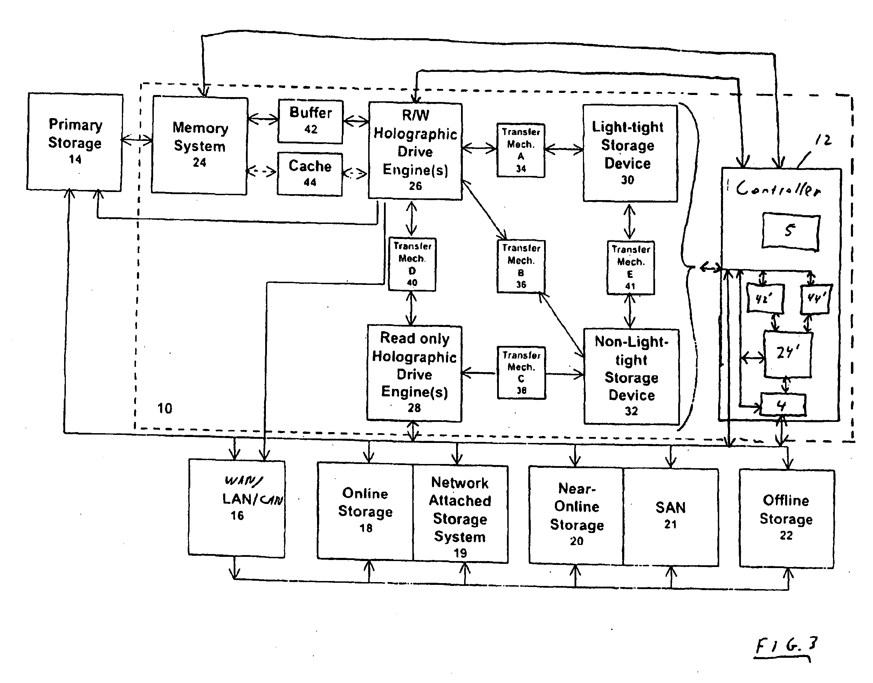

In some arrangements the hybrid data storage system 10 includes a I/O controller, such that, for example, file management and network communication are performed by a controller on a network server, while in others, the controller 12 is part of the system 10 itself as shown, for example, in FIGs. 3-5 and provides further capabilities for processing and arbitration. In such arrangements, the controller 12, and hence the system 10, can receive information directly from, as well as transmit information to, something other than or in addition to the primary storage 14, such as, for example, the WAN and/or LAN 16, the online storage 18, the network storage system 19, the SAN 21, the near-online storage 20, and/or the offline storage 22, or any other suitable source or receptacle of information. Note that certain features of the storage system 10 shown in FIGs. 3-5 are the same as those described with reference to FIG. 1, and therefore are identified by like reference numerals. Also note that the controller 12 can be any of the types of controllers described in detail in "Building Storage Networks," by Marc Farley. Osborne/McGraw-Hill, 2000.

Referring in particular to FIG. 3, the controller 12 communicates directly with, or through a network interface card or adapter 4, the primary storage 14 or the online storage 18 or the network attached storage system 19 or the near-online storage 20 or the SAN 21 or the offline storage 22, or some combinations thereof. Optionally, the information from outside the system 10 can be transmitted to and from the controller 12 through the WAN and/or LAN 16. Furthermore, the controller 12 can communicate directly with the read/write holographic drive engine 26, the read only holographic drive engine 28, and/or the memory system 24 in certain embodiments.

As shown in FIG. 3, the controller 12 in one embodiment includes a CPU 5, one or more data buffers 42', one or more caches 44', and a memory system 24'. The function of the buffer 42' is similar to the buffer 42 discussed earlier. Accordingly, buffers 42' interfaces the memory system 24' to the R/W holographic drive engine 26. The data buffers 42' receives the data from the memory system 24' and then alters the format of the data, if needed, to make it suitably readable for the R/W holographic drive engine 26. That is, the data buffers 42' facilitate transferring the data to the read/write holographic drive engine 26 at a rate which the read/write holographic drive engine 26 is capable of reading and writing to a holographic recording medium. The data buffers 42' can be stand-alone units within the controller 12, or they can reside in the memory system 24'. Additionally or alternatively, as discussed earlier, the data buffers can reside in the R/W holographic drive engine 26.

The cache devices 44' are used in conjunction with the data buffers 42' to improve or substantially optimize the access to data from the memory system 24' to or from the R/W holographic drive engine 26. As with the data buffers 42', the caches may be separate physical units within the controller 12, or they may be logical units located in the memory system 24' or the R/W holographic drive engine 26, or both devices 24' and 26. The cache devices 44', independently or in conjunction with the data buffers 42', substantially optimize the delivery of the data to and from the read/write holographic drive engine 26.

As mentioned earlier, the controller 12 of the system 10 shown in FIG. 3 can facilitate the transmission of information from sources of information other than and in addition to the primary storage 14. As such, the hybrid data storage system 10 is interfaced through the controller 12, in a manner such as for a node, directly or through the WAN/LAN 16, to independently, one or more, or some combination of outside sources of information such as the online storage 18, the network attached storage system 19, the near-online storage 20, the SAN 21, and the offline storage 22. Other sources of information interfaced to the controller are also within the scope of this embodiment. The controller may additionally include a network adapter that can also be an adapter for interface to optical communications carried along optical fiber, through space, or using integrated optics, or combinations thereof, for wireless communications, and by way of example can communicate with protocols such as for IDE, SCSI, Fiber Channel, Firewire, GPIB, IEEE, SDSL, ADSL, HDSL, ISDN, ISDN PRI, DS1, DS3, ATM, X10, T1, T3, Frame Relay, Token Ring, LATA, OCxx, STS-x, SONET, CDDI, FDDI, and the like.

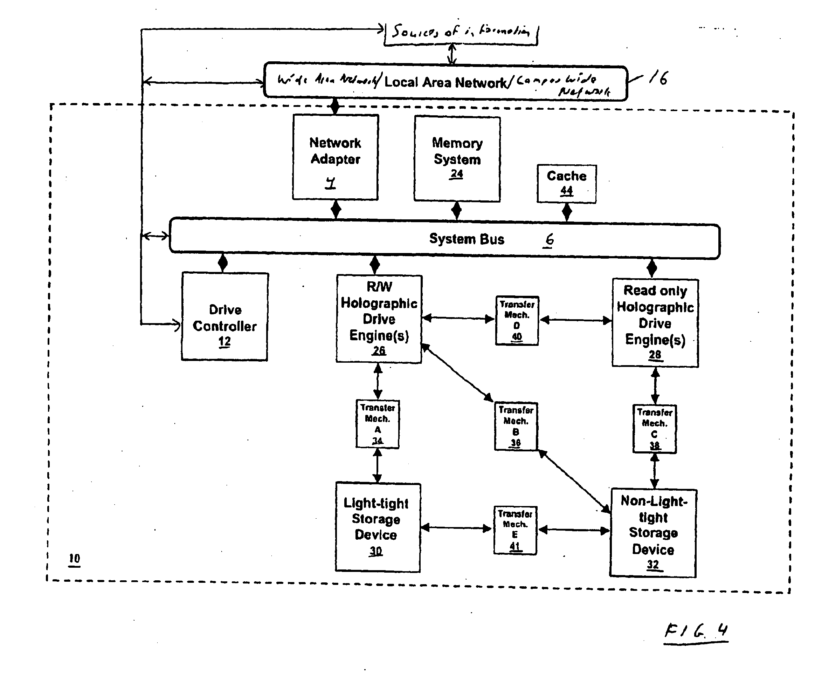

There is shown in FIG. 4, the hybrid data system 10 communicating with the WAN and/or LAN 16 through the network adapter 4. Again, data is transferred between the WAN and/or LAN 16 and the online storage 18, the network attached storage system 19, the SAN 21, the near-online storage 20, and/or the offline storage 22. Other sources of information interfaced to the controller are also contemplated by this embodiment. Also in this embodiment, the network adapter 4 can serve as an adapter for interface to optical communications carried along optical fiber, through space, or using integrated optics, or combinations thereof, for wireless communications, and by way of example can communicate with protocols such as forIDE, SCSI, Fiber Channel, Firewire, GPIB, IEEE, SDSL, ADSL, HDSL, ISDN, ISDN PRI, DS1, DS3, ATM, X10, T1, T3, Frame Relay, Token Ring, LATA, OCxx, STS-x, SONET, CDDI, FDDI, and the like. Similar to the embodiment shown in FIG. 1, holographic recording media are transferred amongst the holographic read/write drive engine 26, the read only drive engine 28, the light-tight storage device 30, and the non-light -tight storage device 32 through the use of the transfer mechanisms A, B, C, D, and E, identified by the reference numerals 34, 36, 38, 40, and 41, respectively.

However, unlike the hybrid data storage system 10 shown in FIG. 1, the storage system 10 of FIG. 4 includes a system bus 6 that facilitates direct transfer of data between the holographic read/write drive engine 26 and the read only drive engine 28, and transmits instructions from the drive controller 12 to the rest of the storage system 10 and data between the wide area network and/or local area network 16 and the storage system 10 through the network adapter card 4. Furthermore, the system bus 6 transmits data between the holographic read/write drive engine 26 and/or the read only drive engine 28 and the memory system 24 with or without the assistance of the cache 44.

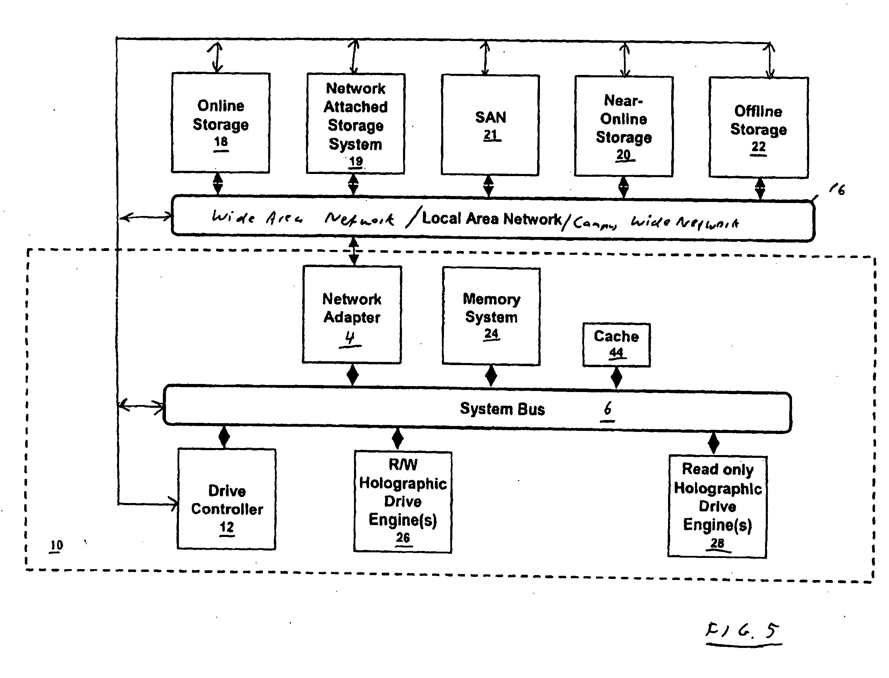

In another embodiment, as illustrated in FIG. 5, communication between the right/write holographic drive engine 26 and the read only holographic drive engine 28 is entirely facilitated by the system bus 6 without the use of transfer mechanisms 34, 36, 38, 40, and 41 or light- and non-light-storage devices 30 and 32. However, the other features of the system 10 shown in FIG. 5 are identical to the system 10 of FIG. 4, as indicated by like reference numerals.

Note that the controller 12 of FIGs. 4 or 5 can operate like the controller shown in FIG. 3. That is, the controller 12 of FIGs. 4 or 5 can communicate directly with the WAN/LAN 16 and/or other sources of outside information. Again, the memory system, one or more cache devices, and/or one or more data buffers can reside in the controller 12 of FIGs. 4 or 5, which can include a CPU 5. Thus, the system 10 of FIGs. 4 or 5, like the system 10 of FIG. 3, can act as a node interfaced through the controller 12, directly or through the WAN/LAN 16, to some combination of outside sources of information, such as, for example the online storage 18, the network attached storage system 19, the near-online storage 20, the SAN 21, and the offline storage 22, or any other suitable source of information.

While this invention has been particularly shown and described with references to preferred embodiments thereof, it will be understood by those skilled in the art that various changes in form and details may be made therein without departing from the scope of the invention encompassed by the appended claims.

## Claims

1. A method of storing and accessing data, comprising:
sending data from a memory system (24); and
receiving the data with a read/write holographic drive engine (26), and writing the data to a holographic recording medium with the read/write holographic drive engine (26); and
**characterized by**:
after the data has been written on the holographic recording medium transferring the holographic recording medium to a read only holographic drive engine (28); and
reading the data from the holographic recording medium with the read only holographic drive engine (28).

2. The method of claim 1, further comprising interfacing the memory system with the read/write holographic drive engine (26) through at least one data buffer (42).

3. The method of claim 1, further comprising substantially optimizing the access of data by the memory system (24) and the read/write holographic drive engine (26) with at least one cache device (44).

4. The method of claim 1, further comprising storing holographic recording media transferred to and from the read/write holographic drive engine (26) in a light-tight storage device (30).

5. The method of claim 1, further comprising storing holographic recording media transferred to and from the read/write holographic drive engine (26) and the read only holographic drive engine (28) in a non-light-tight storage device (32).

6. The method of claim 5, further comprising transferring the recording media between the read/write holographic drive engine (26) and the non-light-tight storage device (32).

7. The method of claim 5, further comprising transferring the recording media between the read only holographic drive engine (28) and the non-light-tight storage device (32).

8. The method of claim 1, further comprising transferring the recording media between the read/write holographic drive engine (26) and the read only holographic drive engine (28).

9. The method of claim 1, further comprising transferring the recording medium between a light-tight storage device (30) and a non-light-tight storage device (32).

10. The method of claim 1, further comprising operating the system under the direction of a controller (12).

## Patentansprüche

1. Verfahren zum Speichern von und Zugreifen auf Daten, umfassend:
Senden von Daten von einem Speichersystem (24); und
Empfangen der Daten mit einer holographischen Lese-/Schreib-Laufwerkmaschine (26), und Schreiben der Daten zu einem holographischen Aufzeichnungsmedium mit der holographischen Lese-/Schreib-Laufwerkmaschine (26); und **gekennzeichnet durch**:
Transferieren des holographischen Aufzeichnungsmediums zu einer holographischen Nur-Lese-Laufwerkmaschine (28), nachdem die Daten auf das holographische Aufzeichnungsmedium geschrieben worden sind; und
Lesen der Daten von dem holographischen Aufzeichnungsmedium mit der holographischen Nur-Lese-Laufwerkmaschine (28).

2. Verfahren nach Anspruch 1, weiter umfassend: Schnittstellenbildung des Speichersystems mit der holographischen Lese-/Schreib-Laufwerkmaschine (26) durch mindestens einen Datenpuffer (42).

3. Verfahren nach Anspruch 1, weiter umfassend: im Wesentlichen Optimieren des Datenzugriffs durch das Speichersystem (24) und die holographische Lese-/Schreib-Laufwerkmaschine (26) mit mindestens einer Cache-Vorrichtung (44).

4. Verfahren nach Anspruch 1, weiter umfassend: Speichern von holographischen Aufzeichnungsmedien, die zu der und von der holographischen Lese-/Schreib-Laufwerkmaschine (26) transferiert werden, in einer lichtdichten Speichervorrichtung (30).

5. Verfahren nach Anspruch 1, weiter umfassend: Speichern von holographischen Aufzeichnungsmedien, die zu der und von der holographischen Lese-/Schreib-Laufwerkmaschine (26) und der holographischen Nur-Lese-Laufwerkmaschine (28) transferiert werden, in einer nicht lichtdichten Speichervorrichtung (32).

6. Verfahren nach Anspruch 5, weiter umfassend: Transferieren der Aufzeichnungsmedien zwischen der holographischen Lese-/Schreib-Laufwerkmaschine (26) und der nicht lichtdichten Speichervorrichtung (32).

7. Verfahren nach Anspruch 5, weiter umfassend: Transferieren der Aufzeichnungsmedien zwischen der holographischen Nur-Lese-Laufwerkmaschine (28) und der nicht lichtdichten Speichervorrichtung (32).

8. Verfahren nach Anspruch 1, weiter umfassend: Transferieren der Aufzeichnungsmedien zwischen der holographischen Lese-/Schreib-Laufwerkmaschine (26) und der holographischen Nur-Lese-Laufwerkmaschine (28).

9. Verfahren nach Anspruch 1, weiter umfassend: Transferieren des Aufzeichnungsmediums zwischen einer lichtdichten Speichervorrichtung (30) und einer nicht lichtdichten Speichervorrichtung (32).

10. Verfahren nach Anspruch 1, weiter umfassend: Betreiben des Systems unter der Steuerung eines Kontrollers (12).

## Revendications

1. Procédé de mémorisation de données et d'accès à celles-ci, comportant les étapes consistant à :
envoyer des données depuis un système de mémoire (24), et
recevoir les données à l'aide d'un moteur d'entraînement holographique de lecture/écriture (26) et écrire les données dans un support d'enregistrement holographique à l'aide du moteur d'entraînement holographique de lecture/écriture (26), et
**caractérisé par** les étapes consistant à :
une fois que les données ont été écrites sur le support d'enregistrement holographique, transférer le support d'enregistrement holographique vers un moteur d'entraînement holographique à lecture seule (28), et
lire les données à partir du support d'enregistrement holographique à l'aide du moteur d'entraînement holographique à lecture seule (28).

2. Procédé selon la revendication 1, comportant en outre l'étape consistant à interfacer le système de mémoire avec le moteur d'entraînement holographique de lecture/écriture (26) via au moins un tampon de données (42).

3. Procédé selon la revendication 1, comportant en outre l'étape consistant à optimiser sensiblement l'accès aux données par le système de mémoire (24) et le moteur d'entraînement holographique de lecture/écriture (26) à l'aide d'au moins un dispositif de cache (44).

4. Procédé selon la revendication 1, comportant en outre l'étape consistant à mémoriser un support d'enregistrement holographique transféré vers le moteur d'entraînement holographique de lecture/écriture (26) et depuis celui-ci dans un dispositif de mémorisation opaque (30).

5. Procédé selon la revendication 1, comportant en outre l'étape consistant à mémoriser un support d'enregistrement holographique transféré vers le moteur d'entraînement holographique de lecture/écriture (26) et le moteur d'entraînement holographique à lecture seule (28) et depuis ceux-ci dans un dispositif de mémorisation non-opaque (32).

6. Procédé selon la revendication 5, comporte en outre l'étape consistant à transférer le support d'enregistrement entre le moteur d'entraînement holographique de lecture/écriture (26) et le dispositif de mémorisation non-opaque (32).

7. Procédé selon la revendication 5, comportant en outre l'étape consistant à transférer le support d'enregistrement entre le moteur d'entraînement holographique à lecture seule (28) et le dispositif de mémorisation non-opaque (32).

8. Procédé selon la revendication 1, comportant en outre l'étape consistant à transférer le support d'enregistrement entre le moteur d'entraînement holographique de lecture/écriture (26) et le moteur d'entraînement holographique à lecture seule (28).

9. Procédé selon la revendication 1, comportant en outre l'étape consistant à transférer le support d'enregistrement entre un dispositif de mémorisation opaque (30) et un dispositif de mémorisation non-opaque (32).

10. Procédé selon la revendication 1, comportant en outre l'étape consistant à mettre en fonctionnement le système sous la direction d'un contrôleur (12).
